**Europäisches Patentamt**

**European Patent Office**

**Office européen des brevets**

(19)

(11) Veröffentlichungsnummer : **0 102 437 B2**

(12) # NEUE EUROPÄISCHE PATENTSCHRIFT

(45) Veröffentlichungstag der neuen Patentschrift :
**29.04.92 Patentblatt 92/18**

(51) Int. Cl.⁵ : **A01F 25/20, B26D 7/01**

(21) Anmeldenummer : **82810368.9**

(22) Anmeldetag : **03.09.82**

(54) **Silagegutschneider, sowie landwirtschaftliches Gerät das einen solchen Silagegutschneider aufweist.**

(43) Veröffentlichungstag der Anmeldung :
**14.03.84 Patentblatt 84/11**

(45) Bekanntmachung des Hinweises auf die
Patenterteilung :
**08.01.86 Patentblatt 86/02**

(45) Bekanntmachung des Hinweises auf die
Entscheidung über den Einspruch :
**29.04.92 Patentblatt 92/18**

(84) Benannte Vertragsstaaten :
**AT BE CH DE FR GB IT LI LU NL SE**

(56) Entgegenhaltungen :
**EP-A- 0 068 305**
**AU-B- 416 478**
**DE-A- 2 357 723**
**DE-A- 2 817 901**
**DE-A- 2 824 964**
**DE-A- 2 918 650**
**DE-A- 3 023 986**

(56) Entgegenhaltungen :
**DE-C- 2 138 186**
**FR-A- 2 216 904**
**FR-A- 2 323 608**
**FR-A- 2 409 690**
**GB-A- 1 456 666**
**GB-A- 2 054 357**
**US-A- 3 477 488**
**US-A- 4 280 276**
**Prospekt "Blockschneider" BS1 Diadem" der Firma Heinrich Wilhelm Dreyer vom Frühjahr 1982**

(73) Patentinhaber : **Trioliet Mullos B.V.**
**Smitsbreeweg 2**
**NL-7581 HE Losser (NL)**

(72) Erfinder : **Der Erfinder hat auf seine Nennung verzichtet**

(74) Vertreter : **de Vries, Johannes Hendrik Fokke et al**
**Octrooibureau Los en Stigter B.V. P.O. Box 20052**
**NL-1000 HB Amsterdam (NL)**

## Beschreibung

Die Erfindung bezieht sich auf einen Silagegutschneider gemäss dem ersten Teil des Anspruches 1, sowie auf ein landwirtschaftliches Gerät, versehen mit einem Aufnahmeorgan, das einen solchen Silagegutschneider aufweist.

Ein solcher Silagegutschneider ist durch öffentliche Vorbenutzung bekannt. Bei diesem bekannten Silagegutschneider sind die benachbarten Enden der Messerelemente durch eine mit Schneidzähne versehene Kette miteinander verbunden. Da die Schneidzähne während des Betriebs fortlaufend um die Ecke des Tragorganes hin und her bewegt werden, wird diese Kette sehr hohen Belastungen unterworfen, was einen schnellen Verschleiss oder Bruch der Kette zur Folge haben könnte. Darüberhinaus wird das Silagegut an den Eckbereichen tatsächlich nicht ausgeschnitten sondern losgebrochen, so dass das Silagegut verloren geht und die Schnittfläche am Silagegutvorrat teilweise unregelmässig wird, was sich nachteilig auf das Silagegut auswirkt.

Der Erfindung liegt die Aufgabe zu Grunde einen Silagegutschneider der obenerwähnten Art zu schaffen, der auch an den Eckbereichen eine ausgezeichnete Schnittwirkung zeigt.

Diese Aufgabe wird erfindungsgemäss gelöst durch das im kennzeichnenden Teil des Anspruches 1 erwähnte Merkmal.

In dieser Weise wird erreicht, dass mit dem erfindungsgemässen Silagegutschneider sehr genau ein rechteckiger Block ausgeschnitten wird, wobei kein Silagegut verloren geht und eine ganz geschlossene Schnittfläche am Silagegutvorrat gebildet wird. Darüberhinaus wird das Verbindungselement der benachbarten Enden der Messerelemente wesentlich niedriger beansprucht.

Die Erfindung bezieht sich weiterhin auf ein landwirtschaftliches Gerät versehen mit einem Aufnahmeorgan, das dadurch gekennzeichnet ist, dass dieses Aufnahmeorgan einen Silagegutschneider nach der Erfindung aufweist. Die Erfindung wird weiterhin erläutert an Hand der Zeichnung.

Fig. 1 zeigt einen Teil einer ersten Ausführung einer Schneidvorrichtung des erfindungsgemässen Silagegutschneiders in Vorderansicht.

Fig. 2 ist ein Querschnitt der Schneidvorrichtung nach Fig. 1.

Fig. 3 ist eine perspektivische Ansicht einer ersten Ausführung eines erfindungsgemässen Silagegutschneiders mit der Schneidvorrichtung nach Fig. 1.

Fig. 4 zeigt perspektivisch ein Eckgebiet der Schneidvorrichtung nach Fig. 3 in grösserem Massstab.

Fig. 5 zeigt einen Teil einer zweiten Ausführung einer Schneidvorrichtung nach der Erfindung in Vorderansicht.

Fig. 6 ist in Querschnitt der Schneidvorrichtung nach Fig. 5.

Fig. 7 zeigt perspektivisch ein Eckgebiet der Schneidvorrichtung nach Fig. 5 in grösserem Massstab.

Fig. 8 zeigt einen Teil einer dritten Ausführung Vorderansicht einer Schneidvorrichtung nach der Erfindung in Vorderansicht.

Fig. 9 ist ein Querschnitt der Schneidvorrichtung nach Fig. 8.

Fig. 10 zeigt perspektivisch ein Eckgebiet der Schneidvorrichtung nach Fig. 8 in grösserem Massstab.

Fig. 11 stellt perspektivisch eine etwas geänderte Ausführung des Silagegutschneiders nach Fig. 3 dar, welche mit einem Abwerforgan ausgeführt ist.

Fig. 12 bis 15 zeigen schematisch verschiedene Stufen beim Ausschneiden eines Silagegutblokkes mit dem Silagegutschneider nach Fig. 11.

Fig. 16 und 17 sind schematische Draufsichten in grösserem Massstab zu Fig. 12 bzw. Fig. 14.

Fig. 18 ist eine schematische teilweise Seitenansicht des aufstehenden Gestellteiles eines Silagegutschneiders sowie eines in diesem geführten Tragorganes (dessen Messerelemente fortgelassen sind) in einer Ausführung, in welcher dieses Tragorgan eine geringe Verschwenkung erfahren kann.

Fig. 19 ist ein Querschnitt durch die Ebene XIX-XIX in Fig. 18.

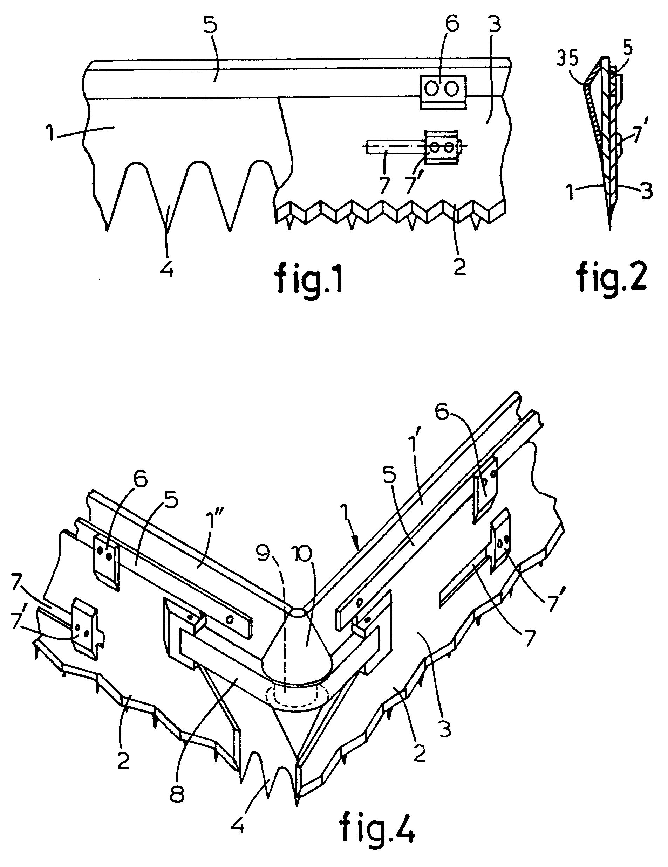

In Fig. 1 ist ein Ausführungsbeispiel dargestellt einer Schneidvorrichtung des erfindungsgemässen Silagegutschneiders zum Schneiden von Viehfutter oder dergleichem Gewächs.

Diese Schneidvorrichtung umfasst ein wenigstens annähernd vertikal auf- und abbewegbares Tragorgan 1, das ein mit Zähnen 2 ausgeführtes Messerorgan 3 unterstützt. Dieses Messerorgan 3 ist relativ zum Tragorgan 1 wenigstens annähernd horizontal hin- und herbewegbar.

Das Tragorgan 1 weist untere Festhaltezähne 4 auf, die tiefer als die Messerzähne 2 abwärts ragen. Ein Silagegutschneider mit einem solchermassen ausgebildeten Tragorgan ist Gegenstand der prioritätsgleichen europäischen Patentanmeldung Nr. 84201442.5, veröffentlicht als EP-A Nr. 0140433.

Das Messerorgan 3 ist weiterhin an der Aussenseite des Tragorganes 1 angeordnet.

Der Abstand zwischen den Spitzen auffolgender Messerzähne 2 ist vorzugsweise kleiner als der Abstand zwischen den Spitzen auffolgender Festhaltezähne 4 des Tragorganes 1, während die Höhe der Messerzähne 2 kleiner ist als die Höhe der Festhaltezähne 4 des Tragorganes 1.

Wie in Fig. 1 deutlich sichtbar ist, schliessen die Flanken der Messerzähne 2 einen kleineren Winkel mit der Verbindungslinie ihrer Zahnspitzen ein als der durch die Flanken der Festhaltezähnen 4 des Tragorganes 1 mit der Verbindungslinie ihrer Zahnspitzen eingeschlossene Winkel.

Im Ausführungsbeispiel nach den Fig. 1 bis 3 sind die Flanken der Messerzähne 2 gerade und schliessen diese einen Winkel mit der Verbindungslinie der Zahnspitzen ein, der kleiner ist als 50° und vorzugsweise kleiner als oder gleich 30° ist.

Als Alternative können die Flanken der Messerzähne 2 auch nach innen gebogen sein.

Im Ausführungsbeispiel nach den Fig. 1 und 2 verlaufen die Festhaltezähne 4 des Tragorganes 1 abwärts schräg in Richtung auf das Messerorgan 3 zu, während die Messerzähne 2 abwärts schräg in Richtung auf das Tragorgan 1 zu verlaufen (Fig. 2).

Das Tragorgan 1 ist weiterhin mit einem oberen Stützrand 5 für das Messerorgan 3 ausgeführt, entlang welchem der obere Rand des Messerorganes 3 hin und her verstellbar ist.

Dieser Stützrand 5 trägt abwärts ragende Einschliesslippen 6, wobei das Messerorgan 3 zwischen diesen Einschliesslippen 6 und dem Tragorgan 1 oszillierend hin- und herbewegbar eingeschlossen ist.

Weiterhin werden das Tragorgan 1 und das Messerorgan 3 gegeneinander gehalten durch ein Führungsorgan, das in dem Ausführungsbeispiel nach Fig. 1 und 2 besteht aus einem oder mehreren Schlitzen 7 im Messerorgan 3, die durch aus dem Tragorgan 1 ragende Stifte passend durchlaufen werden. Aufwärts vom Messerorgan 3 tragen die Stifte eine Einschliessplatte 7', eine Mutter oder dergleichen.

Natürlich ist es als Alternative auch möglich, dass das Messerorgan 3 Stifte trägt, die Schlitze im Tragorgan 1 passend durchlaufen.

Der Hub der hin- und hergehenden Oszillationsbewegung des Messerorganes 3 ist im allgemeinen grösser als der Abstand zwischen den Spitzen auffolgender Messerzähne des Messerorganes 3.

Im dargestellten Ausführungsbeispiel sind das Tragorgan 1 und das Messerorgan 3 plattenförmig ausgeführt.

Weiter kann das Tragorgan 1 statt plattenförmig, auch profilförmig oder kastenförmig ausgeführt sein.

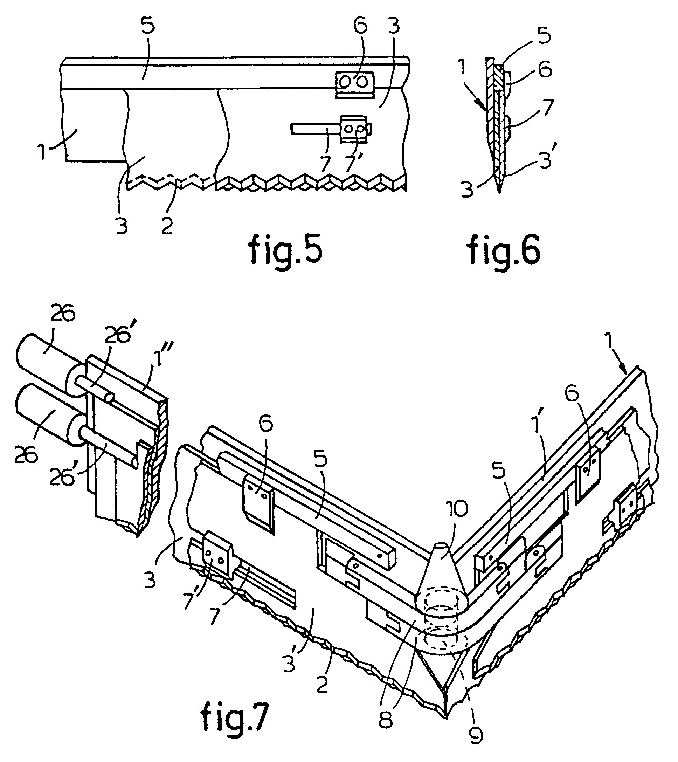

Obwohl in der Ausführung nach den Fig. 1 und 2 das Tragorgan 1 mit nur einem Messerorgan 3 zusammenwirkt, kann das Tragorgan 1 auch in der in den Fig. 5 bis 10 datgestellten Weise noch ein weiteres mit Zähnen ausgeführtes Messerorgan 3' unterstützen, das parallel zum datgestellten Messerorgan 3 verläuft und das relativ zum Tragorgan 1 vorzugsweise weinigstens ungefähr horizontal hin und her verstellbar ist, wobei die Zähne der Messerorgane 3, 3' gegeneinander oszillierend hin- und herbewegbar sind. Obwohl in den Fig. 5 bis 10 nur ein weiteres Messerorgan 3' abgebildet ist, können natürlich auch mehrere weitere Messerorgane 3' angewandt werden.

In den Ausführungen nach den Fug. 5 bis 10 ist das Tragorgan 1 ohne untere Festhalterzähne ausgeführt, aber als Alternative können auch in diesen Ausführungen wieder Festhaltezähne 4 angewandt werden. In diesem Fall schliessen die Flanken der Messerzähne des (jedes) weiteren Messerorganes 3' einen geringeren Winkel mit der Verbindungslinie ihrer Zahnspitzen ein als der durch die Flanken der Festhaltezähne mit der Verbindungslinie ihrer Zahnspitzen eingeschlossene Winkel.

Das weitere Messerorgan 3' bildet das Spiegelbild des Messerorganes 3.

Die beiden Messerorgane 3 und 3' stützen beide gegen den oberen Stützrand 5, entlang welchem ihre oberen Ränder hin und her verstellbar sind. Dieser Stützrand 5 trägt wieder abwärts ragende Einschliesslippen 6, wobei die Messerorgane 3, 3' zwischen diesen Einschliesslippen 6 und dem Tragorgan 1 hin- und herbewegbar eingeschlossen sind.

Weiter werden das Tragorgan 1 und die Messerorgane 3, 3' gegeneinander gehalten durch Stifte am Tragorgan 1, die Schlitze 7 in den Messerorganen 3, 3' durchlaufen. Auswärts vom Messerorgan 3' tragen die Stifte eine Einschliessplatte 7', ein Mutter oder dergleichen.

Die Flanken der Meeserzähne des (jedes) Messerorganes 3, 3' sind im Ausführungsbeispiel nach den Fig. 5 bis 7 gerade und schliessen einen Winkel mit der Verbindungslinie der Zahnspitzen ein, der kleiner ist als 50° und vorzugsweise kleiner als oder gleich 30° ist.

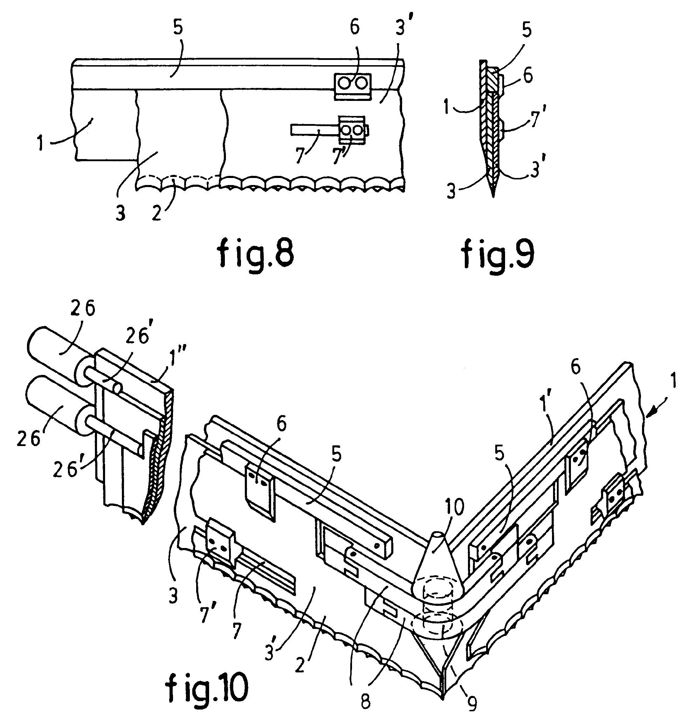

Das Ausführungsbeispiel der Schneidvorrichtung nach den Fig. 8 bis 10 unterscheidet sich nur vom Ausführungsbeispiel nach den Fig. 5 bis 7 dadurch, dass die Flanken der Messerzähne des (jedes) weiteren Messerorganes 3' nach innen gebogen sind.

Die Abwärts- bzw. Aufwärtsverstellung des Tragorganes 1 kann kontinuierlich stattfinden, aber als Alternative ist es gleichfalls möglich, dass die Abwärtsverstellung des Tragorganes 1 intermittierend und die aufwärtsverstellung des Tragorganes 1 kontinuierlich erfolgt.

Diese zwei zusammen ein L-förmiges Messerorgan bildenden Messerelemente 3 sind miteinander gekuppelt und wirken mit Antriebsorganen zusammen, die an die freien Enden der beiden Messerelemente 3 angreifen.

# EP 0 102 437 B2

Obwohl im vorstehenden nur über ein oder zwei Messerelemente 3 gesprochen ist, die zu dem L-förmigen Tragorgan 1 gehören, ist es deutlich, dass auch in diesem Fall mit jedem Messerelement 3 ein oder mehrere weitere Messerelemente 3′ zusammenwirken können in der Weise, wie dies in den Fig. 5 bis 10 erläutert ist.

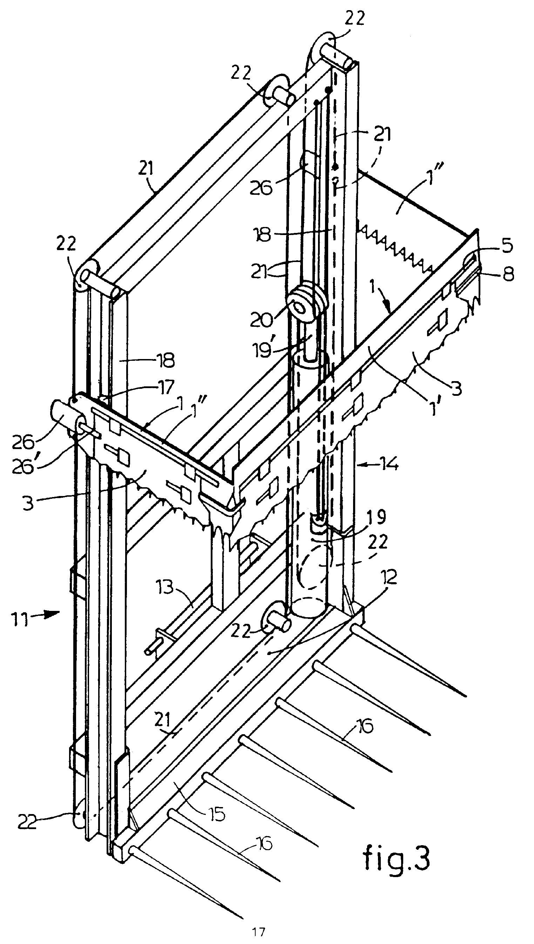

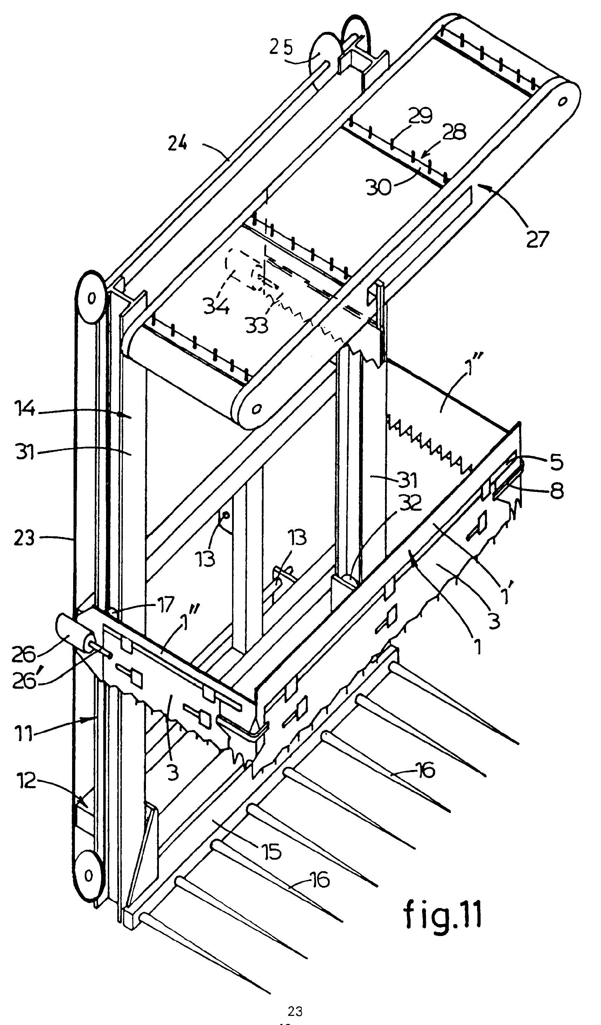

Nach einer besonders günstigen Ausführung der Schneidvorrichtung nach der Erfindung ist das Tragorgan 1 U-förmig (s. die Fig. 3 und 11).

Dieses U-förmige Tragorgan 1 mit zwei Seitenschenkeln 1″ und einem Mittelschenkel 1′ wirkt zusammen mit wenigste einem Messersatz, bestehend aus drei Messerelementen 3, die zusammen ein U-förmiges Messerorgan bilden.

In den Fig. 3 und 11 sind die drei zusammen ein U-förmiges Messerorgan bildenden Messerelemente 3 miteinander gekuppelt und wirken mit im folgenden noch näher beschriebenen Antriebsorganen zusammen, die an die freien Enden der beiden seitlichen Messerelemente 3 angreifen.

Wie insbesondere aus Fig. 4 hervorgeht, sind die benachbarten Enden auffolgender Messerelemente 3 miteinander gekuppelt durch eine wenigstens ungefähr horizontale Kette 8, Band oder dergleichen, deren Enden an den betreffenden Messerelementen 3 befestigt sind, die über eine in der betreffenden Ecke durch das Tragorgan 1 unterstützte Leitrolle 9 mit wenigstens ungefähr vertikaler Längsachse geführt ist.

Weiterhin verläuft oberhalb und unterhalb der Leitrolle 9 kegelförmiges Schutzstück 10.

Der Mittelschenkel 1′ des U-förmigen Tragorganes 1 läuft weiter aufwärts durch als die beiden Seitenschenkel 1″, um zu verhindern, dass gelokkertes Gewächs über diese Seite abwärts fallen würde.

Während in Fig. 4 die Kupplung dargestellt ist zwischen den benachbarten Enden auffolgender Messerelemente 3, ist in den Fig. 7 und 10 die Kupplung abgebildet zwischen den benachbarten Enden auffolgender Messerelemente 3 und Messerelemente 3′. Dabei sind zwei horizontale Ketten 8, Bänder oder dergleichen angewandt, die beide über die Leitrolle 9 geführt sind.

Die in Fig. 3 und 11 dargestellten Silagegutschneider 11, an welchen die im vorstehenden beschriebene Schneidvorrichtung angeordnet ist, weist ein Gestell 12 auf, das mit Anhängepunkten 13 zum Ankuppeln des Silagegutschneiders 11 an die Hebevorrichtung eines Schleppers versehen ist.

Das Gestell 12 umfasst einen aufrechten Gestellteil 14, hinter welchem sich ein horizontaler Querbalken 15 erstreckt, an welchem mehrere parallele, wenigstens ungefähr horizontale Tragzinken 16 befestigt sind. Der Querbalken 15 ist im Ausführungsbeispiel nach Fig. 3 starr mit dem aufrechten Gestellteil 14 verbunden.

Das U-förmige Tragorgan 1, dessen Mittelschenkel 1′ sich weiter aufwärts erstreckt als die Seitenschenkel 1″ und das aus drei Metallplatten zusammengesetzt ist, aber auch profilförmig oder kastenförmig ausgeführt sein kann, ist wenigstens ungefähr vertikal auf und ab verstellbar geführt mit Hilfe in seinen Enden gelagerter Führungsrollen 17, Führungsblöcke oder dergleichen, die im Eingriff mit zu dem aufrechten Gestellteil 14 des Silagegutschneiders 11 gehörenden U-Profilen 18 stehen.

Die Aufwärts- und Abwärtsverstellung des U-förmigen Tragorganes 1 wird bewerkstelligt mit Hilfe durch das Gestell 12 getragener Verstellungsorgane. Diese bestehen beim Silagegutschneider 11 nach Fig. 3 aus einer durch das Gestell 12 unterstützten aufrechten Zylinder-Kolbeneinheit 19, deren Kolbenstange 19′ einen Scheibenblock 20 trägt. Mittels vier Seilen 21, die über den Scheibenblock 20 und über weitere durch das Gestell 12 unterstützte Scheibenblöcke 22 geführt sind und die immer mit einem Ende auf das Gestell 12 und mit dem anderen Ende auf das freie Ende eines der Seitenschenkel 1′ des Tragorganes 1 angreifen, ist das Tragorgan 1 auf und ab verstellbar. Wenn die Kolbenstange 19′ der Zylinder- Kolbeneinheit 19 mit dem Scheibenblock 20 abwärts verstellt wird, wird das Tragorgan 1 aufwärts bewegt, während umgekehrt, wenn die Kolbenstange 19′ der Zylinder-Kolbeneinheit 19 aufwärts verstellt wird, das Tragorgan 1 abwärts bewegt wird.

Die drei durch das Tragorgan 1 unterstützten Messerelemente 3, welche durch die Ketten 8, Bänder oder dergleichen verbunden sind, die in den vom aufrechten Gestellteil 14 entfernten Ekken des Tragorganes 1 über die Leitrollen 9 geführt sind (Fig. 4), können im Ausführungsbeispiel nach Fig. 3 relativ zum Tragorgan 1 hin- und herbewegt werden mittels Zylinder- Kolbeneinheiten 26, die am Tragorgan 1 abgestützt sind und die auf die freien Enden der beiden seitlichen Messerelemente 3 angreifen. Diese Zylinder- Kolbeneinheiten 26, die in diesem Ausführungsbeispiel doppelwirkend ausgeführt sind, werden über ein hydraulisches Umschaltventil und Rückschlagventile (nicht dargestellt) derart betätigt, dass die Kolbenstangen 26′ der beiden Zylinder- Kolbeneinheiten 26 immer in entgegengesetzter Richtung verstellt werden, wodurch die Messerelemente 3 eine hin- und hergehende Bewegung erhalten.

Die beiden doppelwirkenden Zylinder- Kolbeneinheiten 26 sind hydraulisch gekuppelt mit der aufstehenden Zylinder- Kolbeneinheit 19, die die Aufwärts- und Abwärtsbewegung des Tragorganes 1 versorgt. Das Tragorgan 1 wird dabei schrittweise verstellt, wobei jeder Schritt mit einer hin bzw. hergehenden Bewegung der Messerelemente 3 zusammenfällt.

In Fig. 11 ist ein Silagegutschneider 11 dargestellt, bei welchem die Aufwärts- und Abwärtsverstellung des U-förmigen Tragorganes 1 in anderer Weise bewerkstelligt wird und zwar mit Hilfe von auf den Enden der Seitenschenkel 1″ des Tragorganes 1 angreifenden Ketten 23 oder dergleichen, die über obere Antriebsräder und untere Umlenkräder geführt sind. Die unteren Umlenkräder sind im aufrechten Gestellteil 14 gelagert, während die oberen Antriebsräder auf einer Antriebswelle 24 befestigt sind, die im aufrechten Gestellteil 14 gelagert ist und die über ein Antriebsrad 25 mittels einer Kette durch einen Hydromotor oder dergleichen (nicht dargestellt) mit umkehrbarer Drehrichtung antreibbar ist. Dabei wird die oberste und unterste Stellung des Tragorganes 1 durch Umkehrorgane (nicht dargestellt) bestimmt, welche die Umkehrung der Drehrichtung des Hydromotors versorgen können.

In Fig. 11 bestehen die Antriebsmittel für die hin- und hergehende Bewegung der Messerelemente 3 wieder aus Zylinder- Kolbeneinheiten 26, die an die freien Enden der beiden seitlichen Messerorgane 3 angreifen.

Der Silagegutschneiderr 11 nach Fig. 11 ist ausgebildet mit einem oberen Abwerforgan 27, mit welchem ein Silagegutblock, nachdem dieser mittels des hinter einem Schlepper gekuppelten Silagegutschneiders 11 nach einem Viehstall übergebracht ist, regelmässig verteilt abgegeben werden kann.

Das obere Abwerforgan 27, das durch den aufrechten Gestellteil 14 unterstützt ist, umfasst einen Abfuhrförderer 28, der besteht aus durch einen Antrieb (nicht dargestellt) antreibbaren Ketten, die an den Enden von mit Stiften 29 oder dergleichen versehenen Schrableisten 30 angreifen, welche im unteren Trum des Abfuhrförderers 28 auf das Silagegut einwirken können.

In dieser Ausführung umfasst der aufrechte Gestellteil 14 statt U-Profile 18, I-Profile 31, während der Querbalken 15 nicht starr mit dem aufstehenden Gestellteil 14 verbunden ist, aber Führungsrollen 32, Führungsblöcke oder dergleichen trägt, die im Eingriff mit der Innenseite dieser I-Profile 31 stehen. Diese I-Profile 31 stehen auf der Aussenseite, in entsprechender Weise wie die U-Profile 18 in Fig. 3, mit den durch die freien Enden des U-förmigen Tragorganes 1 unterstützten Führungsrollen 17 Führungsblöcken öder dergleichen im Eingriff.

Die auf- und abgehende Verstellung des Querbalkens 15 kann beispielsweise, in entsprechender Weise wie die auf- und abgehende Verstellung des Tragorganes 1 der Schneidvorrichtung, mittels mit dem Querbalken 15 gekuppelter, über Antriebsräder geführter, endloser Ketten oder dergleichen (nicht dargestellt) oder einer in vertikaler Richtung arbeitenden, durch das Gestell 12 getragenen Zylinder- Kolbeneinheit (nicht dargestellt) realisiert werden.

Mit dem Abfuhrförderer 28 wirkt ein zentrales, wenigstens ungefähr horizontales Messer 33 mit unteren Schneidzähnen zusammen, das wenigstens ungefähr in der Mittellotebene des Querbalkens 15 liegt. Dieses Messer 33 ist in seiner Längsrichtung hin und her antreibbar durch ein Antriebsorgan, wie die in Fig. 11 dargestellte Zylinder- Kolbeneinheit 34, die durch das Gestell 12 unterstützt wird.

Als Alternative für das zentrale Messer 33 können auch mehrere, im Abstand nebeneinander verlaufende, antreibbare, parallele, wenigstens ungefähr horizontale Messer mit unteren Schneidzähnen benutzt werden.

Wenn ein Silagegutblock im Viehstall, stützend auf dem Silagegutschneider 11, verteilt werden muss, befindet die Schneidvorrichtung sich in ihrer höchsten Stellung, gerade unter dem Abfuhrförderer 28 und umgibt dort das Messer 33 und den gerade darunter liegenden oberen Teil des Silagegutblockes.

Durch die intermittierende oder kontinuierliche Aufwärtsbewegung des Querbalkens 15 mit den Tragzinken 16 wird der obere Teil des auf diesen Tragzinken 16 ruhenden Silagegutblockes in Eingriff mit dem Messer 33 (den Messern) gebracht, das (die) die obere Schicht des Silagegutes durchschneidet (durchschneiden), bevor die Stifte 29 der Schraborgane 30 des Abfuhrförderers 28 mit dieser in Eingriff kommen.

Die Anwendung des Messers 33 (der Messer) ist besonders von grosser Bedeutung, wenn das Silagegut eine Faserstruktur aufweist, da die langen Fasern vor dem Abwerfen durch den Abfuhrförderer 28 durch das Messer 33 (die Messer) durchgeschnitten und unterteilt werden, wodurch eine gleichmässige Abfuhr des Silagegutes sehr gefördert wird.

Der Abfuhrförderer 28 ist in der Längsrichtung des Querbalkens 15 hin und her verstellbar, wobei das Messer 33 (die Messer) seine (ihre) Stellung relativ zum Gestell 12 behält (behalten).

Diese Verstellmöglichkeit ist von Bedeutung, da bei einem sogenannten Fahrsilo meistens zwei Seitenwände auf beiden Seiten des Silageguthaufens verlaufen. Wenn der Silagegutschneider 11 entlang der einen Wand den ersten Silagegutblock schneiden muss, wird der Abfuhrförderer 28, der immer länger ist als die Breite des Silagegutblockes, da sonst das Gewächs nicht über den Seitenrand des Silagegutblockes geschüttet werden kann, in seine von dieser Wand entfernte Stellung gebracht, während beim Schneiden des letzten Silagegutblockes entlang der gegenüberliegenden Wand der Abfuhrförderer 28 nach seiner anderen Endstellung verstellt wird.

Der Querbalken 15 kann in seiner unteren Stellung relativ zum Gestell 12 riegelbar sein, was von Bedeutung ist beim Einfahren der Tragzinken 16 in das Silagegut.

Um zu erreichen, dass ein ausgeschnittener Silagegutblock und das Tragorgan 1 in besonders einfacher Weise relativ zueinander aufwärts bewegt werden können, ohne dass dabei ein Zerkrümeln des Silagegutes auftritt, ist es natürlich von Bedeutung, dass einiges Spiel zwischen diesem Silagegutblock und dem Tragorgan 1 vorhanden ist.

Dies wird nach der Erfindung dadurch erreicht, dass ein Anschlag, wozu beim Silagegutschneider 11 nach Fig. 11 der Querbalken 15 dient, die Eindringtiefe in das Silagegut der am Querbalken 15 befestigten Tragzinken 16 derart beschränkt, dass der aufrechte Gestellteil 14, nachdem die Tragzinken 16 in das Silagegut geführt sind, noch in einigem Abstand, beispielsweise etwa 5 cm, vom Silagegut entfernt bleibt.

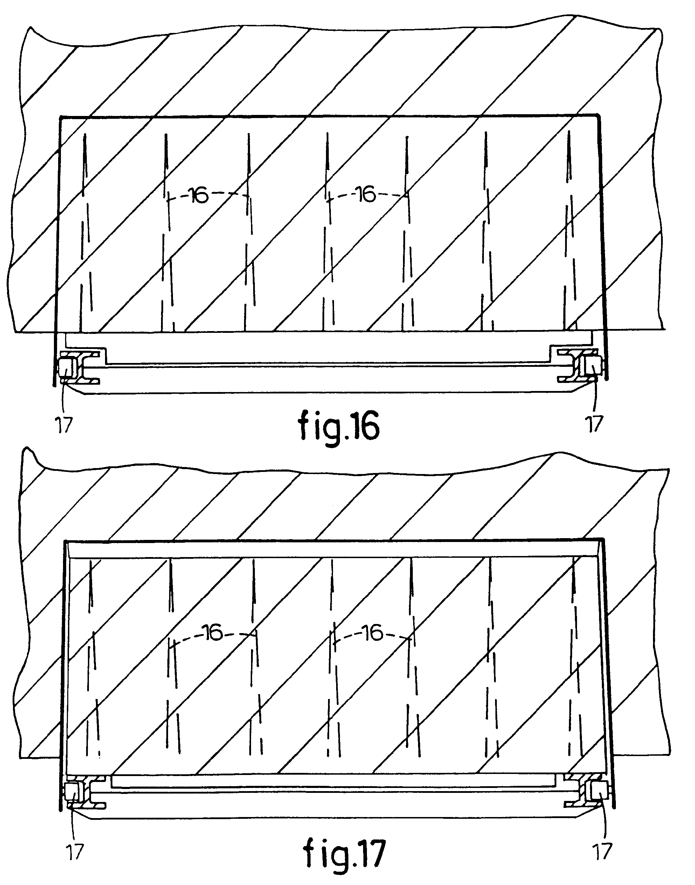

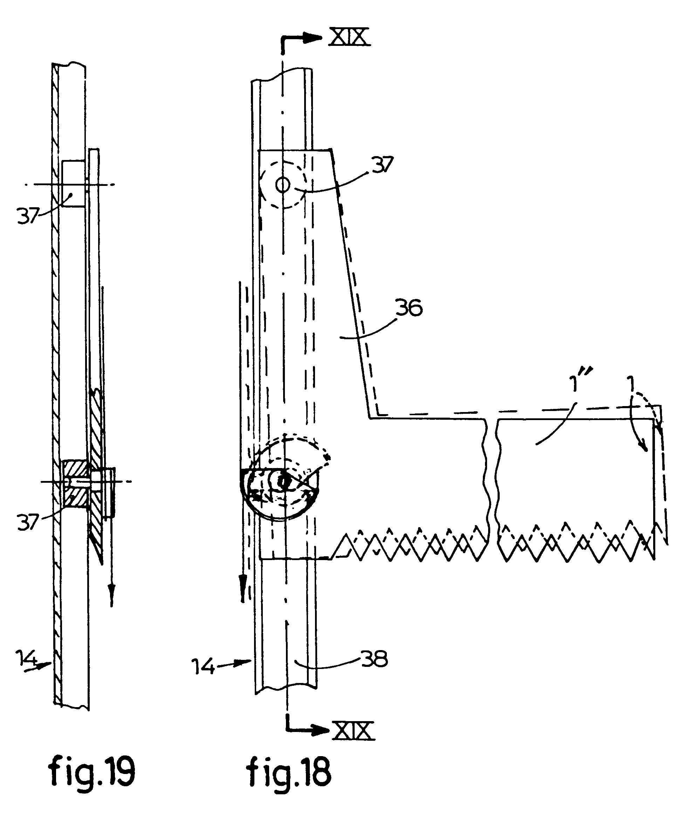

Dazu ist es weiterhin von Vorteil, wenn die vom aufrechten Gestellteil 14 abgekehrten Ecken des U-förmigen Tragorganes 1 etwas grösser als 90°, und vorzugsweise etwa 94°, sind (Fig. 16 und 17).

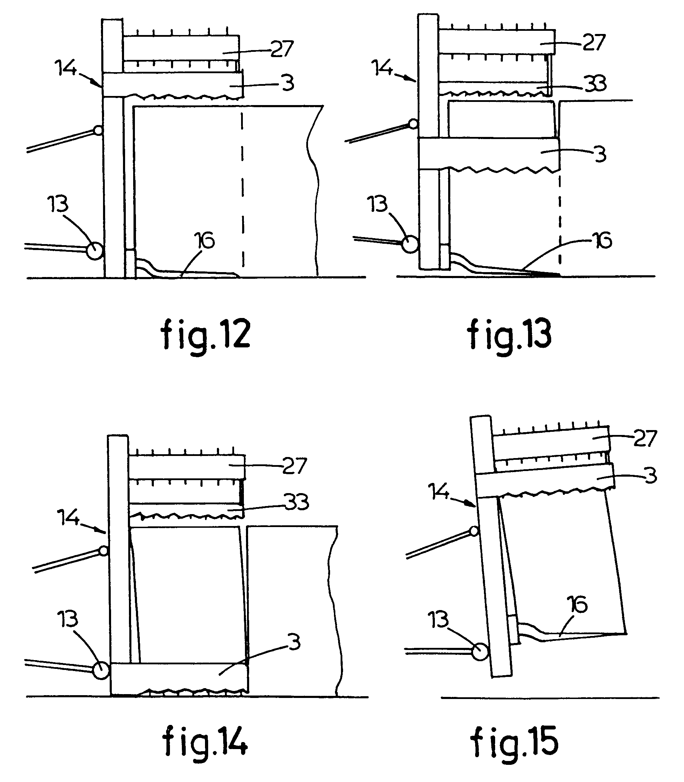

Die Wirkung des Silagegutschneiders nach Fig. 11 ist schematisch erläutert in den Fig. 12 bis 15.

In Fig. 12 sind die Tragzinken 16 über dem Boden in das Silagegut gestochen. Das Tragorgan 1 mit den Messerelementen 3 befinden sich noch in der höchsten Stellung gerade unter dem Abwerforgan 27.

In Fig. 13 hat das Tragorgan 1 mit den Messerelementen 3 die Schneidwirkung angefangen. Die Tragzinken 16 und/oder das Gestell 12 des Silagegutschneiders 11 sind derart dimensioniert, dass dabei unter dem Einfluss der Schneidkraft eine Verformung der Tragzinken 16 und/oder des Gestelles 12 auftritt. In Fig. 13 ist das Gestell 12 unter dem Einfluss der ausgeübten Schneidkraft etwas von dem Boden gehoben, wobei die Tragzinken 16 und ggf. das Gestell 12 durchgebogen sind.

In Fig. 14 hat die Schneidvorrichtung ihre untere Stellung erreicht, in welche die Festhaltezähne 4 des Tragorganes 1 mit dem Boden in Berührung gekommen sind, während die Spitzen der Messerzähne 2 in einem geringen Abstand über dem Boden liegen.

Da die Schneidkraft aufgehoben ist, werden die Tragzinken 16 (und ggf. das Gestell 12) rückfedern, wodurch der Silagegutblock auf der Oberseite automatisch zum aufrechten Gestellteil 14 hin gekantelt wird.

Hiernach wird die Schneidvorrichtung nach ihrer obersten Endlage verstellt und der Silagegutschneider 11 gehoben werden (Fig. 15), wonach dieser durch den Schlepper nach dem Viehstall gefahren werden kann. Im Viehstall wird der Silagegutblock durch die Aufwärtsverstellung des Querbalkens 15 und der Tragzinken 16 allmählich aufwärts bewegt (Fig. 15) und mit dem Messer 33 (den Messern) und weiterhin mit dem Abfuhrförderer 28 in Eingriff gebracht, um regelmässig verteilt abgeworfen zu werden. Natürlich kann die Kantelbewegung auch mit Hilfe eines speziellen Kantelorganes bewerkstelligt werden.

Es ist möglich, wenigstens auf den Mittelschenkel 1' des U-förmigen Tragorganes 1 an der zum aufrechten Gestellteil gekehrten Seite ein Wandteil 35 anzuordnen, der schräg von dem aufstehenden Gestellteil 14 ab und wieder schräg auf diesem aufstehenden Gestellteil 14 zu verläuft. Dieser Wandteil 35 sorgt dafür, dass bei der Aufwärtsverstellung des U-förmigen Tragorganes 1 dieses Tragorgan 1 einen minimalen Widerstand des Silagegutes erfährt, und dass eine Kantelbewegung des ausgeschnittenen Silagegutblockes auf den aufstehenden Gestellteil 14 zu verursacht werden kann (Fig. 2).

In den Fig. 18 und 19 ist eine Ausführung eines Silagegutschneiders 11 dargestellt, bei dem die Enden der beiden Seitenschenkel 1" des Tragorganes 1 je eine nach oben gerichtete Verlängerung 36 aufweisen, in welcher zwei Führungsrollen 37 oder dergleichen übereinander unterstützt sind, die im zugehörigen Profil 38 des aufrechten Gestellteiles 14 passend geführt sind.

Auf beiden Seiten greift die untere der beiden Führungsrollen 37 mittels eines Exzenters 39 an den betreffenden Seitenschenkel 1" des Tragorganes 1 an. Jeder Exzenter 39 ist verbunden mit einem Betätigungsorgan 40, mit welchem der Exzenter 39 drehbar ist zwischen zwei in Fig. 18 in gezogenen Linien und in Strichlinien dargestellten Stellungen, wobei die in gezogenen Linien dargestellte Stellung des Exzenters 39 sowie des Tragorganes 1 die Arbeitslage ist, in welcher die in den Fig. 18 und 19 nicht dargestellten Messerelemente ihre schneidende Wirkung ausführen können, während in der in Strichlinien dargestellten Stellung das Tragorgan 1 um die Achse der oberen Führungsrollen 37 etwas aufwärts geschwenkt ist, wodurch das Tragorgan 1 praktisch frei vom aus:geschnittenen Silageblock kommt. In dieser Weise kann das nach dem Ausschneiden eines Silageblockes erfolgende Aufwärtsverstellen des Tragorganes 1 mit den daran befestigten Messerelementen 3 besonders leicht bewerkstelligt werden. Das Verstellen des Bedienungsorganes 40 kann automatisch, gleichzeitig mit dem Umkehren der Verstellungsrichtung des Tragorganes 1, stattfinden.

Obwohl in den Ausführungsbeispielen nach den Fig. 3 und 11 das U-förmige Tragorgan 1 nur einen Messersatz, bestehend aus drei Messerelementen 3, unterstützt, ist es deutlich, dass in Kombination damit auch ein oder mehrere Messersätze, bestehend aus drei Messerelementen 3', benutzt werden können. In diesem Fall erhalten die verschiedenen Messersätze je eigene Antriebsmittel, wie die Zylinder-Kolbeneinheiten 26, die in den Fig. 7 und 10 dargestellt sind.

Die Erfindung ist nicht beschränkt auf die in der Zeichnung dargestellten Ausführungsbeispiele, die in verschiedenen Weisen im Rahmen des durch die Patentansprüche festgelegten Umfangs abgeändert werden können.

Es ist zum Beispiel möglich, auch andere landwirtschaftliche Geräte für Viehfuttergewächs, wie beispielsweise einen Aufnahmewagen, eine Aufnahmepresse oder dergleichen, zu versehen mit einem Aufnahmeorgan, das einem Silagegutschneider nach der Erfindung aufweist.

**Patentansprüche**

1. Silagegutschneider (11) mit einem Gestell (12), das einen aufrechten Gestellteil (14) und einen wenigstens annähernd horizontalen Querbalken (15), an dem mehrere Tragzinken (16) befestigt sind, umfasst, und mit einer oberhalb der Tragzinken (16) und annähernd parallel zu den Tragzinken am Gestell (12) angeordneten Schneidvorrichting, die ein auf- und niederbewegbares L- oder U-förmiges Tragorgan (1) mit einem oder zwei rechtwinklig zum Gestell (12) ausgerichteten Seitenschenkeln (1″) und einem zum Gestell parallelen Mittelschenkel (1′) aufweist, wobei an jedem der Schenkel (1′, 1″) und längs diesem durch Antriebsmittel oszillierend hin- und herbewegbar ein starres, sägeblattartig Zähne (2) aufweisendes Messerelement geführt ist, so dass die Messerelemente auf der Außenseite des Tragorgans ein gleichfalls U- oder L-förmiges Messerorgan (3) bilden, wobei das eine Ende jedes einem Seitenschenkel (1″) zugeordneten Messerelementes mit einem benachbarten Ende des dem Mittelschenkel (1′) zugeordneten Messerelementes durch ein über die zugehörige Ecke des Tragorganes (1) geführtes biegsames Verbindungselement (8) gekoppelt ist, und wobei ein Antriebsmittel (26) an jedem der beiden nicht mit einem biegsamen Verbindungselement gekoppelten Enden des U- bzw. L-förmigen Messerorgans (3) angreift, dadurch gekennzeichnet, dass das Verbindungselement (8) in einem solchen Abstand von der Endkante des vorderen Messerelements befestigt ist, daß die geradlinige Schnittbahn des vorderen Messerelements beidseitig über die Grenzen des Mittelsolenkels (1′) hinausläuft.

2. Silagegutschneider nach Anspruch 1 dadurch gekennzeichnet, dass das Tragorgan (1) einen oberen Stützrand (5) für das Messerorgan (3) trägt, entlang welchem der obere Rand des Messerorganes (3) verstellbar ist.

3. Silagegutschneider nach Anspruch 2, dadurch gekennzeichnet, dass der Stützrand (5) abwärts ragende Einschliesslippen (6) trägt, wobei das Messerorgan (3) zwischen diesen Einschliesslippen (6) und dem Tragorgan (1) oszillierend hin- und herbewegbar eingeschlossen ist.

4. Silagegutschneider nach einem der vorstehenden Ansprüche, dadurch gekennzeichnet, dass ein Führungsmittel (7, 7′) das Tragorgan (1) und das Messerorgan (3) aufeinander hält.

5. Silagegutschneider nach Anspruch 4, dadurch gekennzeichnet, dass das Tragorgan (1) oder das Messerorgan (3) wenigstens einen Vorsprung hat, der einen Schlitz (7) im anderen Organ passend durchläuft und an seinem aus dem Schlitz (7) ragenden Ende mit einem Einschliessorgan (7′) im Eingriff steht.

6. Silagegutschneider nach einem der vorstehenden Ansprüche, dadurch gekennzeichnet, dass das Tragorgan (1) wenigstens ein weiteres, mit Zähnen (2) ausgeführtes Messerorgan (3′) unterstützt, das wenigstens ungefähr parallel zum erstgenannten Messerorgan (3) verläuft und relativ zum Tragorgan (1) verstellbar ist, wobei die Zähne (2) der Messerorgane (3, 3′) gegeneinander oszillierend hin- und herbewegbar sind.

7. Silagegutschneider nach Anspruch 6, dadurch gekennzeichnet, dass das Führungsmittel (7, 7′) auch die Messerorgane (3, 3′) aufeinander hält.

8. Silagegutschneider nach einem der Ansprüche 1 bis 7, daduch gekennzeichnet, dass das biegsame Verbindungselement (8) ein Band (8), ein Draht oder eine Kette ist.

9. Silagegutschneider nach einem der Ansprüche 1 bis 8, dadurch gekennzeichnet, dass jedes biegsame Verbindungselement (8) über eine am Tragorgan (1) gelagerte Leitrolle (9) geführt

10. Silagegutschneider nach Anspruch 9, dadurch gekennzeichnet, dass oberhalb und unterhalb der Leitrolle (9) ein kegelförmiges Schutzstück (10) verläuft.

11. Silagegutschneider nach einem der Ansprüche 1 bis 10, dadurch gekennzeichnet, dass das Messerorgan (3) U-förmig ist und dass je ein Antriebsmittel (26) an den beiden entgegengesetzten Enden des Messerorganes angreift.

12. Silagegutschneider nach einem der Ansprüche 1 bis 11, dadurch gekennzeichnet, dass das oder die Antriebsmittel Zylinder- Kolbeneinheiten (26) sind, die sich einends am Tragorgan (1) abstützen.

13. Silagegutschneider nach einem der Ansprüche 1 bis 12, dadurch gekennzeichnet, dass der Oszillationshub des Messerorgans (3) grösser ist als der Abstand zwischen den Spitzen aufeinanderfolgender Messerzähne (2) des Messerorgans (3).

14. Silagegutschneider nach einem der vorstehenden Ansprüche, dadurch gekennzeichnet, dass die Flanken der Messerzähne (2) gerade sind und einen Winkel mit der Verbindungslinie der Zahnspitzen einschliessen, der kleiner als 50° und vorzugsweise kleiner als oder gleich 30° ist.

15. Silagegutschneider nach einem der vorstehenden Ansprüche 1 bis 13, dadurch gekennzeichnet, dass die Flanken der Messerzähne (2) nach innen gebogen sind.

16. Silagegutschneider nach einem der vorstehenden Ansprüche, dadurch gekennzeichnet, dass die Messerzähne (2) abwärts schräg in Richtung auf das Tragorgan (1) zu laufen.

17. Silagegutschneider nach einem der Ansprüche 6 bis 16, dadurch gekennzeichnet, dass das jedes weitere Messerorgan (3′) relativ zum Tragorgan (1) wenigstens annähernd horizontal oszillierend hin- und herbewegbar ist.

18. Silagegutschneider nach einem der vorstehenden Ansprüche, dadurch gekennzeichnet, dass das Tragorgan (1) plattenförmig, profilförmig oder kastenförmig ist.

19. Silagegutschneider nach einem der vorstehenden Ansprüche, dadurch gekennzeichnet, dass die Abwärts- bzw. Aufwärtsverstellung des Tragorganes (1) kontinuierlich erfolgt.

20. Silagegutschneider nach einem der vorstehenden Ansprüche 1 bis 18, dadurch gekennzeichnet, dass die Abwärtsverstellung des Tragorganes (1) intermittierend und die Aufwärtsverstellung des Tragorganes (1) kontinuierlich erfolgt.

21. Silagegutschneider nach einem der Ansprüche 11 bis 20, dadurch gekennzeichnet, dass der Mittelschenkel (1') des U-förmigen Tragorganes (1) höher liegt als die beiden Seitenschenkel (1'').

22. Silagegutschneider nach einem der vorstehenden Ansprüche, dadurch gekennzeichnet, dass die Aufwärts- und Abwärtsverstellung des Tragorgans (1) durch über Antriebsräder geführte und an das Tragorgan (1) angreifende endlose Ketten (23) oder dergleichen bewirkt ist.

23. Silagegutschneider nach einem der vorstehenden Ansprüche, dadurch gekennzeichnet, dass die Aufwärts- und Abwärtsverstellung des Tragorgans (1) durch eine aufrechte Zylinder-Kolbeneinheit (19) bewirkt ist, die einen Scheibenblock (20) trägt, über welchen Seile (21) oder Ketten geführt sind, die an dem Tragorgan (1) angreifen.

24. Silagegutschneider nach Anspruch 23, dadurch gekennzeichnet, dass die als die Antriebsmittel für die oszillierende Bewegung des Messerorganes (3) eingesetzten Zylinder-Kolbeneinheiten (26) derart mit der aufrechten Zylinder-Kolbeneinheit (19) gekoppelt sind, dass das Tragorgan (1) schrittweise abwärts verstellt wird, wobei jeder dieser Schritte mit einer hin- bzw. hergehenden Bewegung des Messerorganes (3) zusammenfällt.

25. Silagegutschneider nach einem der Ansprüche 12 bis 24, dadurch gekennzeichnet, dass die die oszillierende Bewegung des Messerorganes (3) versorgenden Zylinder- Kolbeneinheiten (26) doppelwirkend sind.

26. Silagegutschneider nach einem der vorstehenden Ansprüche, dadurch gekennzeichnet, dass der Querbalken (15) mit den Tragzinken (16) in Höherichtung verstellbar am aufrechten Gestellteil (14) gelagert ist, wobei durch das Gestell (12) getragene Verstellungsorgane, wie über Antriebsräder geführte, endlose Ketten oder dergleichen, mit dem Querbalken gekoppelt sind, und dass der Silagegutschneider ein oberes Abwerforgan (27) zum Lockern und Abwerfen des auf dem Silagegutschneider gelagerten Silagegutes aufweist.

27. Silagegutschneider nach Anspruch 26 dadurch gekennzeichnet, dass mit dem Abwerforgan (27) ein wenigstens annähernd senkrecht zum Querbalken (15) stehendes, wenigstens annähernd horizontales Messer (33) zusammenwirkt, das das Silagegut durchschneidet, bevor das Abwerforgan (27) damit in Eingriff kommt.

28. Silagegutschneider nach Anspruch 27, dadurch gekennzeichnet, dass ein zentrales Messer (33) mit dem Abwerforgan (27) zusammenwirkt.

29. Silagegutschneider nach Anspruch 27 oder 28, dadurch gekennzeichnet, dass das jedes Messer (33) in seiner Längsrichtung hin und her antreibbar ist.

30. Silagegutschneider nach einem der Ansprüche 27 bis 29, dadurch gekennzeichnet, dass das Abwerforgan (27) in der Längsrichtung des Querbalkens (15) hin und herverstellbar ist, wobei das (die) Messer (33) seine (ihre) Stellung relativ zum Abwerforgan behält (behalten).

31. Silagegutschneider nach einem der Ansprüche 26 bis 30, dadurch gekennzeichnet, dass der Querbalken (15) in der unteren Stellung relativ zum Gestell (12) verriegelbar ist.

32. Silagegutschneider nach einem der Ansprüche 26 bis 31, dadurch gekennzeichnet, dass der aufrechte Gestellteil (14) zwei Profile (31) aufweist, die auf der Aussenseite mit an den freien Enden des U-förmigen Tragorganes (1) gelagerten Führungsrollen (17), Führungsblöcken oder dergleichen und auf der Innenseite mit an dem Querbalken gelagerten Führungsrollen (32), Führungsblöcken oder dergleichen im Eingriff stehen,

33. Silagegutschneider nach einem der vorstehenden Ansprüche, dadurch gekennzeichnet, dass ein Anschlag die Eindringtiefe der am Querbalken (15) befestigten Tragzinken (16) derart beschränkt, dass der aufrechte Gestellteil (14), nachdem die Tragzinken (16) in das Silagegut geführt sind, in einigem Abstand vom Silagegut entfernt bleibt.

34. Silagegutschneider nach Anspruch 33 dadurch gekennzeichnet, dass der Anschlag durch den Querbalken (15) gebildet ist.

35. Silagegutschneider nach einem der Ansprüche 11 bis 34, dadurch gekennzeichnet, dass die vom aufstehenden Gestellteil (14) abgekehrten Ecken des U-förmigen Tragorgans (1) etwas grösser als 90° sind.

36. Silagegutschneider nach einem der Ansprüche 33 bis 35, dadurch gekennzeichnet, dass ein Kantelorgan vorgesehen ist, das ein Verkantendes Silageblocks zum aufrechten Gestellteil hin bewirkt.

37. Silagegutschneider nach einem der Ansprüche 11 bis 36, dadurch gekennzeichnet, dass wenigstens auf den Mittelschenkel (1') des Ü-förmigen Tragorganes (1) an der zum aufrechten Gestellteil (14) gekehrten Seite ein Wandteil (35) angeordnet ist, der schräg auf den aufstehenden Gestellteil (14) zu und wieder schräg vom aufstehenden Gestellteil (14) ab verläuft.

38. Silagegutschneider nach einem der Ansprüche 11 bis 37, dadurch gekennzeichnet, dass das Tragorgan (1) am aufrechten Gestellteil (14) um eine oberhalb des Tragorgans liegende Schwenkachse schwenkbar gelagert ist.

39. Silagegutschneider nach Anspruch 38, dadurch gekennzeichnet, dass das Tragorgan (1) auf beiden Seiten durch zwei übereinander angeordnete Führungsrollen (37) oder dergleichen relativ zum aufrechten Gestellteil (14) geführt ist und die unteren Führungsrollen (37) je über einen Exzenter (39) an das Tragorgan (1) angreifen.

40. Silagegutschneider nach einem der vorstehenden Ansprüche, dadurch gekennzeichnet, dass die Tragzinken (16) und/oder das Gestell (12) des Silagegutschneiders (11) derart dimensioniert sind, dass nach Wegfall des Schneidedrucks bei der Beendigung des Ausschneidens eines Silagegutblockes dieser automatisch durch das Rückfedern der Tragzinken (16) und/oder des Gestelles (12) zum aufrechten Gestellteil hin bekantet wird.

41. Landwirtschaftliches Gerät, versehen mit einem Aufnahmeorgan, dadurch gekennzeichnet, dass dieses Aufnahmeorgan einen Silagegutschneider nach einem der vorstehenden Ansprüche aufweist.

## Claims

1. Silage cutter (11) having a frame (12) which comprises an upright frame portion (14) and a transverse beam (15) which is at least approximately horizontal and to which a plurality of support prongs (16) are secured and a cutting device, which is arranged on the frame (12) above the support prongs (16) and approximately parallel to the support prongs, and which has a L- or U-shaped support element (1), which can be displaced up and down, with one or two side limbs (1″), formed at right angles to the frame (12), and a middle limb (1′) parallel to the frame, a rigid blade element which has saw blade-like teeth (2) and which can be reciprocated in an oscillating manner by means of drive means, being guided along each of the limbs (1′, 1″), so that the blade elements also form a U- or L-shaped blade element (3), on the outer side of the support element, wherein one end of each blade element associated with a side limb (1″) is connected to an adjacent end of the blade element associated with the middle limb (1′) by means of a flexible connection element (8) which is guided over the associated corner of the support element (1), and a drive means (26) acts at each of both ends of the U- or L-shaped blade element (3) not coupled with a flexible connection element, **characterized in that** the connection element (8) is fixed at such a distance from the end edge of the front blade element, that the linear cutting path of the front blade element extends beyond the boundaries of the middle limb (1′) at both sides.

2. Silage cutter according to Claim 1 characterised in that the support element (1) has an upper supporting rim (5) for the blade element (3), along which the upper edge of the blade element (3) can be displaced.

3. Silage cutter according to Claim 2, characterised in that the supporting rim (5) has downwardly projecting enclosing lips (6), the blade element (3) being enclosed between the said enclosing lips (6) and the support element (1), so that it can be reciprocated in an oscillating manner.

4. Silage cutter according to any one of the preceding claims, characterised in that a guide means (7, 7′) holds the support element (1) and the blade element (3) one on top of the other.

5. Silage cutter according to Claim 4, characterised in that the support element (1) or the blade element (3) has at least one projecting part, which fits through a slot (7) in the other element and which engages at its end projecting through the slot (7) with an enclosing element (7′).

6. Silage cutter according to any one of the preceding claims, characterised in that the support element (1) supports at least one further blade element (3′) formed with teeth (2), which extends at least approximately parallel to the first-mentioned blade element (3) and which can be adjusted relative to the support element (1), the teeth (2) of the blade elements (3, 3′) being reciprocally displaceable in an oscillating manner with respect to each other.

7. Silage cutter according to Claim 6, characterised in that the guide means (7, 7′) also holds the blade elements (3, 3′) one on top of the other.

8. Silage cutter according to any one of the Claims 1 to 7, characterised in that the flexible connection element (8) is a strip (8), a wire or a chain.

9. Silage cutter according to any one of the Claims 1 to 8, characterised in that each flexible connection element (8) is guide over a guide pulley (9) which is mounted on the support element (1).

10. Silage cutter according to Claim 9, characterised in that a wedge-shaped protective piece (10) extends above and below the guide pulley (9).

11. Silage cutter according to any one of the Claims 1 to 10, characterised in that the blade element (3) is U-shaped and in each case a drive means (26) acts at both opposite ends of the blade element.

12. Silage cutter according to any one of the Claims 1 to 11, characterised in that the drive means are cylinder-piston units (26), which at one end are supported by the support element (1).

13. Silage cutter according to any one of the Claims 1 to 12, characterised in that the distance through which the blade element (3) oscillates is greater that the distance between the tips of adjacent teeth (2) of the blade element (3).

14. Silage cutter according to any one of the preceding claims, characterised in that the sides of the blade teeth (2) are straight and form an angle with the connecting line of the tooth tips, which is less than 50° and preferably less than or equal to 30°.

15. Silage cutter according to any one of the preceding Claims 1 to 13, characterised in that the sides of the blade teeth (2) are bent inwards.

16. Silage cutter according to any one of the preceding claims, characterised in that the teeth (2) of the blade extend downwards at an angle in the direction of the support element (1).

17. Silage cutter according to any one of the Claims 6 to 16, characterised in that the/each additional blade element (3') can be reciprocated in an oscillating manner at least approximately horizontally with respect to the support element (1).

19. Silage cutter according to any one of the preceding claims, characterised in that the support element (1) is plate-shaped, profiled or box-shaped.

19. Silage cutter according to any one of the preceding claims, characterised in that the downward or upward displacement of the support element (1) is effected continuously.

20. Silage cutter according to any one of the preceding Claims 1 to 18, characterised in that the downward displacement of the support element (1) is effected intermittently and the upward displacement of the support element (1) is effected continuously.

21. Silage cutter according to any one of the Claims 11 to 20, characterised in that the middle limb (1') of the U-shaped support element (1) is higher than the two side limbs (1'').

22. Silage cutter according to any one of the preceding claims, characterised in that the upward and downward displacement of the support element (1) is effected by means of continuous chains (23) or the like, which are guided over drive wheels and act upon the support element (1).

23. Silage cutter according to any one of the preceding claims, characterised in that the upward and downward displacement of the support element (1) is effected by means of an upright cylinder-piston unit (19), which comprises a pulley block (20), over which cables (21) or chains are guided, which act upon the support element (1).

24. Silage cutter according to Claim 3, characterised in that the cylinder-piston units (26), which are used as the drive means for the oscillating movement of the blade element (3), are connected to the upright cylinder-piston unit (19) in such a manner that the support element (1) is displaced downwards in stages, each stage coinciding with a reciprocating movement of the blade element (3).

25. Silage cutter according to any one of the Claims 12 to 24, characterised in that the cylinder-piston units (26) which provide the oscillating movement of the blade element (3) are double-acting.

26. Silage cutter according to any one of the preceding claims, characterised in that the transverse beam (15) with the support prongs (16) is mounted on the upright frame portion (14) so as to be height-adjustable, adjustment elements supported by the frame (12), such as continuous chains or the like, which are guided over drive wheels, being connected to the transverse beam, and the silage cutter comprises an upper discarding element (27) for loosening and discarding the silage deposite on the silage cutter.

27. Silage cutter according to Claim 26, characterised in that a blade (33), which is arranged at least approximately perpendicular to the transverse beam (15) and which is at least approximately horizontal, cooperates with the discarding element (27), and cuts through the silage before the discarding element (27) comes into contact therewith.

28. Silage cutter according to Claim 27, characterised in that a central blade (33) cooperates with the discarding element (27).

29. Silage cutter according to Claim 27 or 28, characterised in that they/each blade (33) can be propelled reciprocally in its longitudinal direction.

30. Silage cutter according to any one of the Claims 27 to 29, characterised in that the discarding element (27) can be reciprocated in the longitudinal direction of the transverse beam (15), the blade(s) (33) maintaining its/their position relative to the discarding element.

31. Silage cutter according to any one of the Claims 26 to 30 characterised in that the transverse beam (15) can be locked in the lower position relative to the frame (12).

32. Silage cutter according to any one of the Claims 26 to 31, characterised in that the upright frame portion (14) comprises two profiles (31), which on the outside engage with guide pulleys (17), guide blocks or the like, which are mounted at the free ends of the U-shaped support element (1), and on the inside engage with guide pulleys (32), guide blocks or the like which are mounted on the transverse beam (32).

33. Silage cutter according to any one of the preceding claims, characterised in that a stop restricts the penetration depth of the support prongs (16) secured to the transverse beam (15), such that the upright frame portion (14) remains at a certain distance from the silage after the support prongs (16) have been introduced into the silage.

34. Silage cutter according to Claim 34, characterised in that the stop is formed by the transverse beam (15).

35. Silage cutter according to any one of the Claims 11 to 34, characterised in that the corners of the U-shaped support element (1), which face away from the upright frame portion (14), have angles which are slightly greater than 90°.

36. Silage cutter according to any one of the Caims 32 to 35, characterised in that a tilting element is provided which effects a tilting of the silage block towards the upright frame portion.

37. Silage cutter according to any one of the Claims 11 to 36 characterised in that a wall part (35) is arranged at least on the middle limb (1′) of the U-shaped support element (1) on the side facing the upright frame portion (14), and extends at an angle towards the upright frame portion (14) and also at an angle away from the upright frame portion (14).

38. Silage cutter according to any one of the Claims 11 to 72, characterised in that the support element (1) is mounted on the upright frame portion (14) so as to pivot about a pivot axis arranged above the support element.

39. Silage cutter according to Claim 38, characterised in that the support element (1) is conveyed relative to the upright frame portion (14) by two guide rollers (37) or the like on both sides, which are arranged one on top of the other and the lower guide pulleys (37) each act upon the support element (1) via an eccentric (39).

40. Silage cutter according to any one of the preceding claims, characterised in that the support prongs (16) and/or the frame (12) of the silage cutter (11) are dimensioned such that, when the cutting pressure ceases after a silage block has been cut out, the latter is automatically tilted towards the upright frame portion as a result of the resilience of the support prongs (16) and/or of the frame (12).

41. Agricultural device provided with a receiving element, characterised in that the said receiving element comprises a silage cutter according to any one of the preceding claims.


**Revendications**

1. Hacheur (11) à fourrage ensilé, comprenant un bâti (12) qui comporte une partie verticale (14) et une traverse (15) au moins approximativement horizontale à laquelle sont fixées plusieurs dents de support (16), ainsi qu'un dispositif de sectionnement qui est situé au-dessus des dents de support (16), occupe sur le bâti (12) une position approximativement parallèle à ces dents de support et présente un organe de suppport (1) configuré en L ou en U, mobile en va-et-vient vertical et muni d'une ou de deux branches latérales (1″) orientées à angle droit par rapport au bâti (12), ainsi que d'une branche centrale (1′) parallèle audit bâti, un couteau rigide, doté de dents (2) agencées à la manière d'une lame de scie et auquel des moyens d'entraînement peuvent imprimer un mouvement alternatif oscillatoire, étant mobile sur chacune des branches (1′, 1″) et le long de cette dernière, de façon que les couteaux forment un organe de coupe (3) également configuré en U ou L à la face externe de l'organe de support, l'une extrémité de chaque couteau associé à une branche latérale (1″) est accouplée à une extrémité voisine du couteau associé à la branche centrale (1′), par un élément souple de liaison (8) guidé par l'intermédiaire du coin correspondant de l'organe de support (1), et un moyen d'entraînement (26) vient en prise avec chacune des deux extrémités de l'organe de coupe (3) configuré en L ou U, qui ne sont pas accouplée au élément souple de liaison (8), **caractérisé par** le fait que l'élément de liaison (8) est fixé à une telle distance de l'extrémité du couteau de devant, que la trajectoire de coupe rectiligne du couteau de devant dépasse les limites de la branche centrale (1′) des deux côtés.

2. Hacheur à fourrage ensilé selon l'une des revendications 1 caractérisé par le fait que l'organe de support (1) porte un bord supérieur d'appui (5) pour l'organe de coupe (3) bord le long duquel l'arête supérieure de l'organe de couple (3) peut être ajustée.

3. Hacheur à fourrage ensilé selon la revendication 2, caractérisé par le fait que le bord d'appui (5) porte des lèvres d'emprisonnement (6) en saillie vers le bas, l'organe de coupe (3) étant captif, avec faculté de va-et-vient oscillatoire, entre ces lèvres d'emprisonnement (6) et l'organe de support (1).

4. Hacheur à fourrage ensilé selon l'une des revendications précédentes, caractérisé par le fait qu'un moyen de guidage (7, 7′) maintient l'un sur l'autre l'organe de support (1) et l'organe de coupe (3).

5. Hacheur à fourrage ensilé selon la revendication 4, caractérisé par le fait que l'organe de support (1) ou l'organe de coupe (3) possède au moins une saillie qui traverse étroitement de part en part une fente (7) pratiquée dans l'autre organe, et est en prise avec une pièce d'emprisonnement (7′) par son extrémité sortant de la fente (7).

EP 0 102 437 B2

6. Hacheur à fourrage ensilé selon l'une des revendications précédentes, caractérisé par le fait que l'organe de support (1) soutient au moins un autre organe de coupe (3') réalisé avec des dents (2), qui s'étend au moins à peu près parallèlement à l'organe de coupe (3) cité en premier lieu et est mobile par rapport à l'organe de support (1), les dents (2) des organes de coupe (3, 3') étant mobiles les unes par rapport aux autres selon un mouvement alternatif oscillatoire.

7. Hacheur à fourrage ensilé selon la revendication 6, caractérisé par le fait que le moyen de guidage (7, 7') maintient également l'un sur l'autre les organes de coupe (3, 3').

8. Hachoir à fourrage ensilé selon l'une des revendications 1 à 7, caractérisé par le fait que l'élément souple de liaison (8) consiste en une bande (8), un fil métallique ou une chaîne.

9. Hacheur à fourrage ensilé selon l'une des revendications 1 à 8, caractérisé par le fait que chaque élément souple de liaison (8) est guidé par l'intermédiaire d'un galet de guidage (9) monté sur l'organe de support (1).

10. Hacheur à fourrage ensilé selon la revendication 9, caractérisé par le fait qu'une pièce conique de protection (10) s'étend au-dessus et au-dessous du galet de guidage (9).

11. Hacheur à fourrage ensilé selon l'une des revendications 1 à 10, caractérisé par le fait que l'organe de coupe (3) a la forme d'un U, et par le fait qu'un moyen d'entraînement respectif (26) est en prise avec les deux extrémités opposées de l'organe de coupe.

12. Hacheur à fourrage ensilé selon l'une des revendications 1 à 11, caractérisé par le fait que le ou les moyens d'entraînement consistent en des vérins (26) en appui par une extrémité sur l'organe de support (1).

13. Hacheur à fourrage ensilé selon l'une des revendications 1 à 12, caractérisé par le fait que la course d'oscillation de l'organe de coupe (3) est plus grande que la distance entre les pointes de dents de coupe (2) successives de l'organe de coupe (3).

14. Hacheur à fourrage ensilé selon l'une des revendications précédentes, caractérisé par le fait que les flancs des dents de coupe (2) sont rectilignes et délimitent, avec la ligne de jonction des pointes des dents, un angle inférieur à 50° et, de préférence, inférieur ou égal à 30°.

15. Hacheur à fourrage ensilé selon l'une des revendications précédentes 1 à 13, caractérisé par le fait que les flancs des dents de coupe (2) sont cintrés vers l'intérieur.

16. Hacheur à fourrage ensilé selon l'une des revendications précédentes, caractérisé par le fait que les dents de coupe (2) s'étendent à l'oblique vers le bas en direction de l'organe de support (1).

17. Hacheur à fourrage ensilé selon l'une des revendications 6 à 16, caractérisé par le fait que le/chaque autre organe de coupe (3') peut être animé, par rapport à l'organe de support (1), d'un mouvement alternatif oscillatoire au moins approximativement horizontal.

18. Hacheur à fourrage ensilé selon l'une des revendications précédentes, caractérisé par le fait que l'organe de support (1) est en forme de plaque, de profilé ou de caisson.

19. Hacheur à fourrage ensilé selon l'une des revendications précédentes, caractérisé par le fait que le mouvement respectivement descendant ou ascendant de l'organe de support (1) se déroule continûment.

20. Hacheur à fourrage ensilé selon l'une des revendications 1 à 18, caractérisé par le fait que le mouvement descendant de l'organe de support (1) a lieu par intermittence et le mouvement ascendant de cet organe de support (1) se déroule continûment.

21. Hacheur à fourrage ensilé selon l'une des revendications 11 à 20 caractérisé par le fait que la branche centrale (1') de l'organe de support (1) configuré en U est située plus haut que les deux branches latérales (1").

22. Hacheur à fourrage ensilé selon l'une des revendications précédentes, caractérisé par le fait que les mouvements ascendant et descendant de l'organe de support (1) sont provoqués par des chaînes sans fin (23) ou pièces analogues, guidées par l'intermédiaire de pignons d'entraînement et en prise avec l'organe de support (1).

23. Hacheur à fourrage ensilé selon l'une des revendications précédentes, caractérisé par le fait que les mouvements ascendant et descendant de l'organe de support (1) sont provoqués par un vérin vertical (19) qui porte un paquet de disques (20), par l'intermédiaire duquel sont guidés des câbles (21) ou des chaînes en prise avec l'organe de support (1).

24. Hacheur à fourrage ensilé selon la revendication 23, caractérisé par le fait que les vérins (26), utilisés en tant que moyens d'entraînement assurant le mouvement oscillatoire de l'organe de coupe (3), sont accouplés au vérin vertical (19) de manière que l'organe de support (1) soit déplacé pas à pas vers le bas, chacun de ces pas coïncidant avec un mouvement respectif d'aller ou de retour de l'organe de coupe (3).

25. Hacheur à fourrage ensilé selon l'une des revendications 12 à 24, caractérisé par le fait que les vérins (26) assurant le mouvement oscillatoire de l'organe de coupe (3) sont à double action.

26. Hacheur à fourrage ensilé selon l'une des revendications précédentes, caractérisé par le fait que la traverse (15) et conjointement les dents de support (16) sont montées sur la partie verticale (14) du bâti avec faculté d'ajustement en hauteur, des organes d'ajustement portés par le bâti (12), tels que des chaînes sans

**12**

fin ou pièces analogues guidées par l'intermédiaire de pignons d'entraînement, étant accouplés à ladite traverse, et par le fait que le hacheur à fourrage ensilé présente un élément supérieur d'éjection (27) pour désagréger et expulser le fourrage à ensiler placé sur ledit hacheur.

27. Hacheur à fourrage ensilé selon la revendication 26, caractérisé par le fait qu'un couteau (33), au moins approximativement horizontal et disposé au moins approximativement perpendiculairement à la traverse (15), coopère avec l'élément d'éjection (27), ce couteau sectionnant de part en part le fourrage à ensiler avant que l'élément d'éjection (27) vienne en prise avec ce dernier,

28. Hacheur à fourrage ensilé selon la revendication 27, caractérisé par le fait qu'un couteau central (33) coopère avec l'élément d'éjection (27).

29. Hacheur à fourrage ensilé selon l'une des revendications 27 ou 28, caractérisé par le fait que le/chaque couteau (33) peut être entraîné en va-et-vient dans sa direction longitudinale.

30. Hacheur à fourrage ensilé selon l'une des revendications 27 à 29, caractérisé par le fait que l'élément d'éjection (27) peut être animé d'un mouvement alternatif dans le sens longitudinal de la traverse (15), le/les couteaux (33) conservant sa/leur position par rapport à l'élément d'éjection.

31. Hacheur à fourrage ensilé selon l'une des revendications 26 à 30, caractérisé par le fait que la traverse (15) peut être verrouillée dans la position inférieure par rapport au bâti (12).

32. Hacheur à fourrage ensilé selon l'une des revendications 26 à 31, caractérisé par le fait que la partie verticale (14) du bâti possède deux profilés (31) qui sont en prise sur leur face externe avec des galets de guidage (17), des sabots de guidage ou éléments analogues montés aux extrémités libres de l'organe de support (1) configuré en U et, sur leur face interne, avec des galets de guidage (32), des sabots de guidage ou éléments analogues montés sur la traverse.

33. Hacheur à fourrage ensilé selon l'une des revendications précédentes, caractérisé par le fait qu'une butée limite la profondeur de pénétration des dents de support (16) fixées à la traverse (15), de telle sorte que, après que lesdites dents de support (16) ont pénétré dans le fourrage à ensiler, la partie verticale (14) du bâti demeure à une certaine distance de ce fourrage à ensiler.

34. Hacheur à fourrage ensilé selon la revendication 33, caractérisé par le fait que la butée est formée par la traverse (15).

35. Hacheur à fourrage ensilé selon l'une des revendications à 11 à 34, caractérisé par le fait que les coins de l'organe de support (1) en U, tournés à l'opposé de la partie verticale (14) du bâti, sont sensiblement plus grands que 90°.

36. Hacheur à fourrage ensilé selon l'une des revendications 33 à 35, caractérisé par le fait qu'il est prévu un organe de blocage qui provoque un coincement du ballot de fourrage à ensiler, en direction de la partie verticale du bâti.

37. Hacheur à fourrage ensilé selon l'une des revendications 11 à 36, caractérisé par le fait qu'une partie de cloisonnement (35), située au moins sur la branche centrale (1') de l'organe de support (1) configuré en U, du côté tourné vers la partie verticale (14) du bâti, s'étend obliquement en direction de cette partie verticale (14) du bâti, puis de nouveau à l'oblique depuis cette partie verticale (14).

38. Hacheur à fourrage ensilé selon l'une des revendications 11 à 37, caractérisé par le fait que l'organe de support (1) est monté à pivotement sur la partie verticale (14) du bâti, autour d'un axe de pivotement situé au-dessus de cet organe de support.

39. Hacheur à fourrage ensilé selon la revendication 38, caractérisé par le fait que l'organe de support (1) est guidé de part et d'autre, par rapport à la partie verticale (14) du bâti, par deux galets de guidage (37) ou éléments analogues superposés, les galets de guidage inférieurs (37) étant en prise avec l'organe de support (1) par l'intermédiaire d'un excentrique respectif (39).

40. Hacheur à fourrage ensilé selon l'une des revendications précédentes, caractérisé par le fait que les dents de support (16) et/ou le bâti (12) de ce hacheur (11) à fourrage ensilé sont dimensionnés de manière que, après le relâchement de la pression de coupe une fois achevé le sectionnement d'un ballot de fourrage à ensiler, ce dernier soit automatiquement coincé vers la partie verticale du bâti, par suite du rappel élastique des dents de support (16) et/ou du bâti (12).

41. Appareil agricole, muni d'un organe récepteur et caractérisé par le fait que cet organe récepteur possède un hacheur à fourrage ensilé selon l'une des revendications précédentes.

fig.1

fig.2

fig.4

fig.3

fig.5

fig.6

fig.7

fig.8

fig.9

fig.10

fig.11

fig.12

fig.13

fig.14

fig.15

fig.16

fig.17

fig.19    fig.18